# EUROPEAN PATENT APPLICATION

(11) **EP 4 322 602 A1**
(43) Date of publication of application: **14.02.2024**
(21) Application number: 22806666.8
(22) Date of filing: 07.05.2022
(51) Int. Cl.: H04W 24/10

(54) **CHANNEL STATE INFORMATION REPORTING METHOD AND APPARATUS**

(30) Priority: 10.05.2021 CN 202110507936
(71) Applicant: Huawei Technologies Co., Ltd., Longgang Shenzhen, Guangdong 518129 (CN)
(72) Inventor: JIAO, Shurong, Shenzhen, Guangdong 518129 (CN); HUA, Meng, Shenzhen, Guangdong 518129 (CN); SCHIER, Thorsten, Shenzhen, Guangdong 518129 (CN)
(74) Representative: Pfenning, Meinig & Partner mbB
(86) International application number: PCT/CN2022/091575
(87) International publication number: WO 2022/237700

(57) **Abstract**

This application provides a channel state information CSI reporting method and an apparatus, to reduce a waste of spectrum efficiency and improve transmission performance of a PDSCH, and relates to the field of wireless communications technologies. In the method, a network device sends DCI to a terminal device. The terminal device measures a DMRS of the PDSCH based on the DCI, to obtain a measurement result of the DMRS, then determines CSI based on the measurement result of the DMRS and a target BLER, and sends the CSI to the network device. According to the foregoing solution, the target BLER of the PDSCH is considered in reported CSI, so that the terminal device may determine accurate CSI, and the network device can also adjust a parameter of downlink transmission more accurately, thereby improving network performance.

## Description

### CROSS-REFERENCE TO RELATED APPLICATION

This application claims priority to Chinese Patent Application No. 202110507936.3, filed with the China National Intellectual Property Administration on May 10, 2021 and entitled "CHANNEL STATE INFORMATION REPORTING METHOD AND APPARATUS", which is incorporated herein by reference in its entirety.

### TECHNICAL FIELD

This application relates to the field of wireless communications technologies, and in particular, to a channel state information CSI reporting method and an apparatus.

### BACKGROUND

Ultra-reliable and low-latency communications (ultra-reliable and low latency communications, URLLC) requires that a network be capable of placing a specific amount of data in a specific time-frequency resource and sending the data through a wireless air interface within a specified ultra-short time, and meet a specified ultra-high reliability requirement. In a wireless communication process, a terminal device reports channel state information (channel state information, CSI) to a network device, and the network device determines a modulation and coding scheme (modulation and coding scheme, MCS) of a physical downlink shared channel (physical downlink shared channel, PDSCH) based on the CSI, and indicates the MCS to a terminal. However, the MCS determined by the network device may not match actual channel quality during PDSCH transmission. Consequently, a waste of spectrum efficiency or a problem that the terminal device cannot correctly receive the PDSCH may be caused.

### SUMMARY

This application provides a CSI reporting method and an apparatus, to reduce a waste of spectrum efficiency and improve transmission performance of a PDSCH.

According to a first aspect, this application provides a CSI reporting method and an apparatus. The method may be performed by a terminal device, or may be performed by a chip having a function of a terminal device. In the method, the terminal device may receive downlink control information (downlink control information, DCI). The DCI may include MCS indication information and DMRS configuration information of a first PDSCH. The terminal device may measure a DMRS of the first PDSCH based on the DMRS configuration information of the first PDSCH, to obtain a measurement result of the DMRS of the first PDSCH. The terminal device may send CSI. The CSI may be determined based on the measurement result of the DMRS and a target block error rate (block error rate, BLER) of the first PDSCH.

According to the foregoing solution, the target BLER of the first PDSCH is considered in reported CSI, so that the terminal device may determine accurate CSI, and a network device can also adjust a parameter of downlink transmission more accurately, thereby improving network performance.

In a possible implementation, the CSI may include a difference between MCS indexes and a difference between channel quality indicator (channel quality indicator, CQI) indexes. The difference between the MCS indexes may be determined based on a first MCS index and a second MCS index. The first MCS index may be determined based on the measurement result of the DMRS and the target BLER of the first PDSCH, and the second MCS index may be indicated by the MCS indication information. The difference between the CQI indexes may be determined based on a first CQI index and a second CQI index. The first CQI index may be determined based on the measurement result of the DMRS and the target BLER of the first PDSCH, and the second CQI index may be determined based on the MCS indication information.

According to the foregoing solution, the terminal device may determine, based on a BLER of the first PDSCH and an MCS indicated by the network device, a difference between actual channel quality of the PDSCH and channel quality of the PDSCH scheduled by the network device, and report the difference between channel quality of PDSCHs to the network device, so that the network device adjusts a parameter of downlink transmission, thereby improving network performance.

In a possible implementation, the difference between the MCS indexes may alternatively be determined based on an MCS offset value, and the MCS offset value may be indicated by the network device. The difference between the CQI indexes may alternatively be determined based on a CQI offset value, and the CQI offset value may be indicated by the network device.

According to the foregoing solution, because a fixed target BLER is used to search for an MCS index or a CQI index indicated by the MCS indication information, a difference between the MCS index and an actual MCS index of the PDSCH or a difference between the CQI index and an actual CQI index of the PDSCH is large, and exceeds a reported value range of the MCS index difference or the CQI index difference. Therefore, the MCS index difference or the CQI index difference may be adjusted, based on the MCS offset value or the CQI offset value, to the reported value range that can be reported.

In a possible implementation, the terminal device may receive BLER indication information. The BLER indication information may indicate the target BLER.

According to the foregoing solution, the network device may indicate the target BLER or a BLER offset value to the terminal device based on the BLER indication information, so that flexibility of indicating the target BLER can be improved.

In a possible implementation, the target BLER may be determined based on at least one of the following parameters: a physical layer priority indicator, a DCI format, an RNTI, or a mapping type of the first PDSCH.

According to the foregoing solution, the target BLER may be determined based on an association relationship between the target BLER and some parameters of the PDSCH, so that a signaling overhead may be reduced.

In a possible implementation, when data carried in the first PDSCH is initial transmission data, the target BLER may be a first value. When data carried in the first PDSCH is retransmission data, the target BLER may be a second value. The first value is different from the second value.

In a possible implementation, the CSI may alternatively be determined based on a measurement result of a DMRS of a second PDSCH. The second PDSCH and the first PDSCH transmit a same transport block (transport block, TB).

In a possible implementation, if the data carried in the first PDSCH is the retransmission data, the measurement result of the DMRS of the first PDSCH is obtained by combining measurement results of the DMRS of the first PDSCH during each transmission.

In a possible implementation, if the first PDSCH is repeatedly transmitted for the k^{th} time, the measurement result of the DMRS of the first PDSCH is obtained by combining measurement results of the DMRS of the first PDSCH obtained from the 1^{st} transmission to the k^{th} transmission. k is greater than or equal to 1.

In a possible implementation, if the first PDSCH is repeatedly transmitted for the k^{th} time and the n^{th} repeated transmission is canceled, the measurement result of the DMRS of the first PDSCH is obtained by combining measurement results of the DMRS of the first PDSCH obtained from the 1^{st} transmission to the (n-1)^{th} repeated transmission, and from the (n+1)^{th} repeated transmission to the k^{th} repeated transmission. n is greater than or equal to 1, and n is less than or equal to k.

In a possible implementation, if the first PDSCH is repeatedly transmitted for the k^{th} time and the n^{th} repeated transmission is canceled, the measurement result of the DMRS of the first PDSCH is determined based on measurement results of the DMRS of the first PDSCH obtained from the 1^{st} transmission to the (n-1)^{th} repeated transmission and from the (n+1)^{th} repeated transmission to the k^{th} repeated transmission as well as a first factor. The first factor may be associated with a quantity k of repeated transmissions.

In a possible implementation, if the first PDSCH is repeatedly transmitted for the k^{th} time, the measurement result of the DMRS of the first PDSCH is a measurement result of the DMRS of the first PDSCH during the k^{th} repeated transmission. Alternatively, the measurement result of the DMRS of the first PDSCH is the maximum in measurement results of the DMRS of the first PDSCH that are determined during each repeated transmission. Alternatively, the measurement result of the DMRS of the first PDSCH is the minimum in measurement results of the DMRS of the first PDSCH that are determined during each repeated transmission. The measurement result of the DMRS of the first PDSCH is an average value of measurement results of the DMRS of the first PDSCH that are determined during each repeated transmission.

According to a second aspect, a CSI reporting method is provided. The method may be performed by a network device, or may be performed by a chip having a function of a network device. In the method, the network device may send DCI. The DCI may include MCS indication information and DMRS configuration information of a first PDSCH. The network device may receive CSI. The CSI may be determined based on a measurement result of a DMRS and a target BLER of the first PDSCH.

In a possible implementation, the CSI may include a difference between MCS indexes and a difference between CQI indexes. The difference between the MCS indexes may be determined based on a first MCS index and a second MCS index. The first MCS index may be determined based on the measurement result of the DMRS and the target BLER of the first PDSCH, and the second MCS index may be indicated by the MCS indication information. The difference between the CQI indexes may be determined based on a first CQI index and a second CQI index. The first CQI index may be determined based on the measurement result of the DMRS and the target BLER of the first PDSCH, and the second CQI index may be determined based on the MCS indication information.

In a possible implementation, the network device may further send MCS offset value indication information or CQI offset value indication information.

In a possible implementation, the network device may send BLER indication information. The BLER indication information may indicate the target BLER.

In a possible implementation, the target BLER may be determined based on at least one of the following parameters: a physical layer priority indicator, a DCI format, an RNTI, or a mapping type of the first PDSCH.

In a possible implementation, when data carried in the first PDSCH is initial transmission data, the target BLER may be a first value. When data carried in the first PDSCH is retransmission data, the target BLER may be a second value. The first value is different from the second value.

In a possible implementation, the CSI may alternatively be determined based on a measurement result of a DMRS of a second PDSCH. The second PDSCH and the first PDSCH transmit a same TB.

In a possible implementation, if the data carried in the first PDSCH is the retransmission data, the measurement result of the DMRS of the first PDSCH is obtained by combining measurement results of the DMRS of the first PDSCH during each transmission.

In a possible implementation, if the first PDSCH is repeatedly transmitted for the k^{th} time, the measurement result of the DMRS of the first PDSCH is obtained by combining measurement results of the DMRS of the first PDSCH obtained from the 1^{st} transmission to the k^{th} transmission. k is greater than or equal to 1.

In a possible implementation, if the first PDSCH is repeatedly transmitted for the k^{th} time and the n^{th} repeated transmission is canceled, the measurement result of the DMRS of the first PDSCH is obtained by combining measurement results of the DMRS of the first PDSCH obtained from the 1^{st} transmission to the (n-1)^{th} repeated transmission, and from the (n+1)^{th} repeated transmission to the k^{th} repeated transmission. n is greater than or equal to 1, and n is less than or equal to k.

In a possible implementation, if the first PDSCH is repeatedly transmitted for the k^{th} time and the n^{th} repeated transmission is canceled, the measurement result of the DMRS of the first PDSCH is determined based on measurement results of the DMRS of the first PDSCH obtained from the 1^{st} transmission to the (n-1)^{th} repeated transmission and from the (n+1)^{th} repeated transmission to the k^{th} repeated transmission as well as a first factor. The first factor may be associated with a quantity k of repeated transmissions.

In a possible implementation, if the first PDSCH is repeatedly transmitted for the k^{th} time, the measurement result of the DMRS of the first PDSCH is a measurement result of the DMRS of the first PDSCH during the k^{th} repeated transmission. Alternatively, the measurement result of the DMRS of the first PDSCH is the maximum in measurement results of the DMRS of the first PDSCH that are determined during each repeated transmission. Alternatively, the measurement result of the DMRS of the first PDSCH is the minimum in measurement results of the DMRS of the first PDSCH that are determined during each repeated transmission. The measurement result of the DMRS of the first PDSCH is an average value of measurement results of the DMRS of the first PDSCH that are determined during each repeated transmission.

According to a third aspect, a communication apparatus is provided, including a transceiver module and a processing module. The transceiver module is configured to receive DCI. The DCI includes MCS indication information and DMRS configuration information of a first PDSCH. The processing module is configured to measure a DMRS of the first PDSCH based on the DMRS configuration information of the first PDSCH, to obtain a measurement result of the DMRS of the first PDSCH. The transceiver module is further configured to send CSI. The CSI is determined based on the measurement result of the DMRS and a target BLER of the first PDSCH.

In a design, the CSI may include a difference between MCS indexes and a difference between CQI indexes. The difference between the MCS indexes may be determined based on a first MCS index and a second MCS index. The first MCS index may be determined based on the measurement result of the DMRS and the target BLER of the first PDSCH, and the second MCS index may be indicated by the MCS indication information. The difference between the CQI indexes may be determined based on a first CQI index and a second CQI index. The first CQI index may be determined based on the measurement result of the DMRS and the target BLER of the first PDSCH, and the second CQI index may be determined based on the MCS indication information.

In a design, the difference between the MCS indexes may alternatively be determined based on an MCS offset value, and the MCS offset value may be indicated by a network device. The difference between the CQI indexes may alternatively be determined based on a CQI offset value, and the CQI offset value may be indicated by the network device.

In a design, the transceiver module is further configured to receive BLER indication information. The BLER indication information may indicate the target BLER.

In a design, the target BLER may be determined based on at least one of the following parameters: a physical layer priority indicator, a DCI format, an RNTI, or a mapping type of the first PDSCH.

In a design, when data carried in the first PDSCH is initial transmission data, the target BLER may be a first value. When data carried in the first PDSCH is retransmission data, the target BLER may be a second value. The first value is different from the second value.

In a design, the CSI may alternatively be determined based on a measurement result of a DMRS of a second PDSCH. The second PDSCH and the first PDSCH transmit a same TB.

According to a fourth aspect, a communication apparatus is provided, including a processing module and a transceiver module. The processing module is configured to generate DCI. The DCI may include MCS indication information and DMRS configuration information of a first PDSCH. The transceiver module is configured to send the DCI. The transceiver module is further configured to receive CSI. The CSI may be determined based on a measurement result of a DMRS and a target BLER of the first PDSCH.

In a design, the CSI may include a difference between MCS indexes and a difference between CQI indexes. The difference between the MCS indexes may be determined based on a first MCS index and a second MCS index. The first MCS index may be determined based on the measurement result of the DMRS and the target BLER of the first PDSCH, and the second MCS index may be indicated by the MCS indication information. The difference between the CQI indexes may be determined based on a first CQI index and a second CQI index. The first CQI index may be determined based on the measurement result of the DMRS and the target BLER of the first PDSCH, and the second CQI index may be determined based on the MCS indication information.

In a design, the transceiver module is further configured to send MCS offset value indication information or CQI offset value indication information.

In a design, the transceiver module is further configured to send BLER indication information. The BLER indication information may indicate the target BLER.

In a design, the target BLER may be determined based on at least one of the following parameters: a physical layer priority indicator, a DCI format, an RNTI, or a mapping type of the first PDSCH.

In a design, when data carried in the first PDSCH is initial transmission data, the target BLER may be a first value. When data carried in the first PDSCH is retransmission data, the target BLER may be a second value. The first value is different from the second value.

In a design, the CSI may alternatively be determined based on a measurement result of a DMRS of a second PDSCH. The second PDSCH and the first PDSCH transmit a same TB.

According to a fifth aspect, a communication apparatus is provided, including a processor. The processor is coupled to a memory. The memory is configured to store a computer program or instructions. The processor is configured to execute the computer program or the instructions, to perform the method in the implementations in the first aspect and/or the second aspect. The memory may be located inside or outside the apparatus. There is one or more processors.

According to a sixth aspect, this application provides a communication apparatus, including a processor and an interface circuit. The interface circuit is configured to communicate with another apparatus. The processor is configured to perform the method in the implementations in the first aspect and/or the second aspect.

According to a seventh aspect, a communication apparatus is provided. The apparatus includes a logic circuit and an input/output interface.

In a design, the input/output interface is configured to input DCI. The DCI may include MCS indication information and DMRS configuration information of a first PDSCH. The logic circuit is configured to measure a DMRS of the first PDSCH based on the DMRS configuration information of the first PDSCH, to obtain a measurement result of the DMRS of the first PDSCH. The input/output interface is further configured to output CSI. The CSI may be determined based on the measurement result of the DMRS and a target BLER of the first PDSCH.

In a design, the logic circuit is configured to generate the DCI. The DCI may include the MCS indication information and the DMRS configuration information of the first PDSCH. The input/output interface is configured to output the DCI. The input/output interface is further configured to input the CSI. The CSI may be determined based on the measurement result of the DMRS and the target BLER of the first PDSCH.

According to an eighth aspect, this application provides a communication system, including a terminal device configured to perform the method in the implementations in the first aspect and a network device configured to perform the method in the implementations in the second aspect.

According to a ninth aspect, this application further provides a chip system, including a processor, configured to perform the method in the implementations in the first aspect and/or the second aspect.

According to a tenth aspect, this application further provides a computing program product, including computer executable instructions. When the computer executable instructions are run on a computer, the method in the implementations in the first aspect and/or the second aspect is performed.

According to an eleventh aspect, this application further provides a computer-readable storage medium. The computer-readable storage medium stores a computer program or instructions. When the instructions are run on a computer, the method in the implementations in the first aspect and/or the second aspect is implemented.

In addition, for beneficial effects of the second aspect to the eleventh aspect, refer to the beneficial effect shown in the first aspect.

### BRIEF DESCRIPTION OF DRAWINGS

FIG. 1 is a schematic diagram of a communication system according to an embodiment of this application;
FIG. 2 is a schematic diagram of data transmission between a terminal and a base station according to an embodiment of this application;
FIG. 3 is a first example flowchart of a CSI reporting method according to an embodiment of this application;
FIG. 4 is a schematic diagram of distribution of a DMRS of a PDSCH according to an embodiment of this application;
FIG. 5 is a schematic diagram of repeated transmission of PDSCH according to an embodiment of this application;
FIG. 6 shows a correspondence between an SNR and a CQI for different BLERs according to an embodiment of this application;
FIG. 7 is a second example flowchart of a CSI reporting method according to an embodiment of this application;
FIG. 8 is a first schematic diagram of a communication apparatus according to an embodiment of this application; and
FIG. 9 is a second schematic diagram of a communication apparatus according to an embodiment of this application.

### DESCRIPTION OF EMBODIMENTS

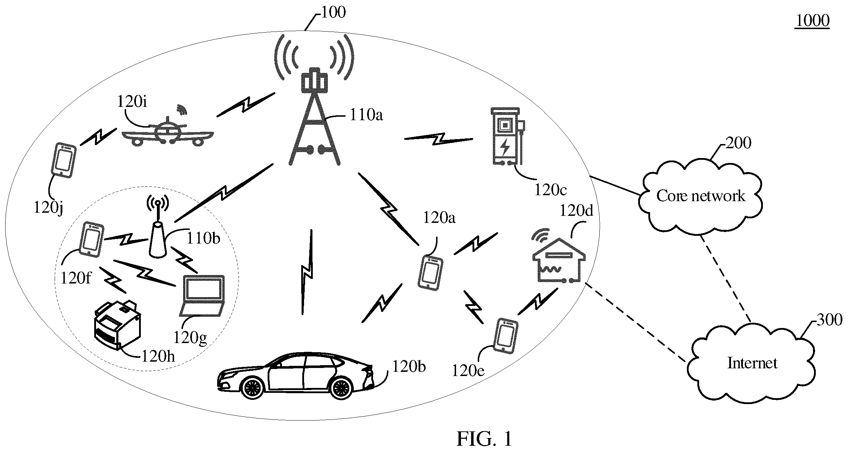

FIG. 1 is a schematic diagram of an architecture of a communication system 1000 used in an embodiment of this application. As shown in FIG. 1, the communication system includes a radio access network 100 and a core network 200. Optionally, the communication system 1000 may further include an internet 300. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network in a wireless or wired manner. The core network device and the radio access network device may be independent and different physical devices, or functions of the core network device and logical functions of the radio access network device are integrated into a same physical device, or a part of functions of the core network device and a part of functions of the radio access network device are integrated into one physical device. A wired or wireless manner may be used for connection between terminals and between radio access network devices. FIG. 1 is only a schematic diagram. The communication system may further include another network device, for example, may further include a wireless relay device and a wireless backhaul device, which are not shown in FIG. 1.

The radio access network device may also be referred to as a network device, and may be a base station (base station), an evolved NodeB (evolved NodeB, eNodeB), a transmission reception point (transmission reception point, TRP), a next generation base station (next generation NodeB, gNB) in a 5^{th} generation (5^{th} generation, 5G) mobile communication system, a next generation base station in a 6^{th} generation (6^{th} generation, 6G) mobile communication system, a base station in a future mobile communication system, an access node in a Wi-Fi system, or the like; or may be a module or unit that completes a part of functions of the base station, for example, may be a central unit (central unit, CU), or may be a distributed unit (distributed unit, DU). The CU completes functions of a radio resource control protocol and a packet data convergence layer protocol (packet data convergence protocol, PDCP) of the base station, and may further complete a function of a service data adaptation protocol (service data adaptation protocol, SDAP). The DU completes functions of a radio link control layer and a medium access control (medium access control, MAC) layer of the base station, and may further complete a function of some or all physical layers. For detailed descriptions of the foregoing protocol layers, refer to related technical specifications of a 3^{rd} generation partnership project (3^{rd} generation partnership project, 3GPP). The radio access network device may be a macro base station (for example, 110a in FIG. 1), or may be a micro base station or an indoor station (for example, 110b in FIG. 1), or may be a relay node, a donor node, or the like. A specific technology and a specific device form used by the radio access network device are not limited in embodiments of this application. For ease of description, the following uses an example in which the base station is used as the radio access network device for description.

The terminal may also be referred to as a terminal device, user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine-type communication (machine-type communication, MTC), internet of things (internet of things, IOT), virtual reality, augmented reality, industrial control, self-driving, telemedicine, a smart grid, smart furniture, smart office, smart wearable, intelligent transportation, and smart city. The terminal may be a mobile phone, a tablet computer, a computer with a wireless transceiver function, a wearable device, a vehicle, an unmanned aerial vehicle, a helicopter, an airplane, a ship, a robot, a mechanical arm, a smart home device, or the like. A specific technology and a specific device form used by the terminal are not limited in embodiments of this application.

The base station and the terminal may be fixed or movable. The base station and the terminal may be deployed on land, where the deployment includes indoor or outdoor, handheld or vehicle-mounted deployment; may be deployed on water; or may be deployed on an airplane, a balloon, or an artificial satellite in the air. An application scenario of the base station and the terminal are not limited in embodiments of this application.

Roles of the base station and the terminal may be opposite. For example, the helicopter or the unmanned aerial vehicle 120i in FIG. 1 may be configured as a mobile base station. For the terminal 120j accessing the radio access network 100 through 120i, the terminal 120i is the base station; and for the base station 110a, 120i is the terminal. To be specific, communication is performed between 110a and 120i by using a wireless air interface protocol. Certainly, communication may also be performed between 110a and 120i by using an interface protocol between base stations. In this case, compared with 110a, 120i is also the base station. Therefore, both the base station and the terminal may be collectively referred to as a communication apparatus, 110a and 110b in FIG. 1 may be referred to as a communication apparatus having a base station function, and 120a to 120j in FIG. 1 may be referred to as a communication apparatus having a terminal function.

Communication between the base station and the terminal, between the base station and the base station, and between the terminal and the terminal may be performed by using a licensed spectrum, or may be performed by using an unlicensed spectrum, or may be performed by using both a licensed spectrum and an unlicensed spectrum. Communication may be performed by using a spectrum below 6 gigahertz (gigahertz, GHz), or may be performed by using a spectrum above 6 GHz, or may be simultaneously performed by using a spectrum below 6 GHz and a spectrum above 6 GHz. A spectrum resource used for wireless communication is not limited in embodiments of this application.

In embodiments of this application, a function of the base station may be performed by a module (such as a chip) in the base station, or may be performed by a control subsystem including a base station function. The control subsystem including a base station function herein may be a control center in the foregoing application scenarios such as a smart grid, an industrial control, an intelligent transportation, a smart city. A function of the terminal may alternatively be performed by a module (such as a chip or a modem) in the terminal, or may be performed by an apparatus including a terminal function.

In this application, the base station sends a downlink signal or downlink information to the terminal, where the downlink information is carried on a downlink channel; and the terminal sends an uplink signal or uplink information to the base station, where the uplink information is carried on an uplink channel. To communicate with the base station, the terminal needs to establish a wireless connection to a cell controlled by the base station. A cell that establishes a wireless connection to the terminal is referred to as a serving cell of the terminal. When communicating with the serving cell, the terminal is further interfered by a signal from a neighboring cell.

In this embodiment of this application, a time domain symbol may be an orthogonal frequency division multiplexing (orthogonal frequency division multiplexing, OFDM) symbol, or may be a discrete Fourier transform-spread-OFDM (Discrete Fourier Transform-spread-OFDM, DFT-s-OFDM) symbol. Unless otherwise specified, symbols in embodiments of this application are all time domain symbols.

It may be understood that in embodiments of this application, a PDSCH, a physical downlink control channel (physical downlink control channel, PDCCH), and a physical uplink control channel (physical uplink control channel, PUCCH) are merely used as examples of a downlink data channel, a downlink control channel, and an uplink control channel. In different systems and different scenarios, data channels and control channels may have different names. This is not limited in embodiments of this application.

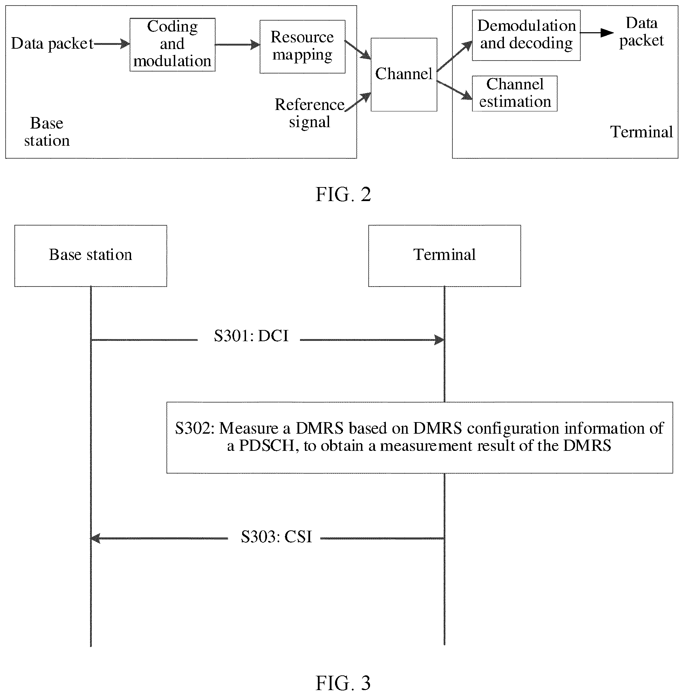

FIG. 2 is a schematic diagram of information transmission performed by a base station and a terminal through a radio channel according to an embodiment of this application. A time-frequency resource of a reference signal and a signal form of the reference signal are pre-agreed by the base station and the terminal, and therefore are known to the terminal. Therefore, the terminal may obtain channel quality information by using a received reference signal and a known reference signal. Because features of the radio channel at different frequency domain locations may be greatly different, the reference signal usually needs to cross a plurality of subbands on a frequency domain resource, and each subband may be a multiple of a subcarrier spacing. A reference signal on each subband may be used for measuring a radio channel of the subband. The terminal may obtain radio channel information through measurement. The obtained channel information may include a signal to noise ratio (signal to noise ratio, SNR) or a signal to interference plus noise ratio (signal to interference plus noise ratio, SINR). For ease of description, the following uses an example in which the channel information includes the SINR for description.

The terminal may further determine CSI based on the information obtained through measurement. The CSI may include a CQI, and may further include a precoding matrix indicator and a rank indicator. The CQI may indicate a relationship between the SINR and transmission efficiency. The transmission efficiency may refer to a size of a data packet carried in a given transmission resource. If an SINR of a given subband is x dB, the base station may perform transmission at a transmission rate of y bit/s, and obtain an expected average error probability, for example, an error probability of 0.1. When a size of a time-frequency resource used for data transmission is determined, data transmission efficiency and a transmission rate may be mutually converted. In this application, the two terms may be interchanged.

The base station may determine data sending efficiency based on CSI reported by the terminal. If efficiency indicated by the CSI is higher than efficiency that can be supported by an actual channel, an error probability of data transmission is higher than expected; if the efficiency indicated by the CSI is lower than efficiency that can be supported by an actual channel, an error probability of data transmission is lower than expected. As a result, a waste of a spectrum resource is caused.

When notifying the base station of the CSI, the terminal needs to notify the base station of the CSI through limited bits. To enable the terminal and the base station to have a unified understanding of a CQI index (index) included in the CSI, a CQI table is specified in the communication protocol, for example, Table 1 and Table 2 below. Table 1 includes 16 CQI indexes, and each row of information in the table may be indicated by using 4 bits. Each row includes the following information:
(1) Modulation scheme, such as quadrature phase shift keying (quadrature phase shift keying, QPSK), 16 quadrature amplitude modulation (quadrature amplitude modulation, QAM), or 64QAM.
(2) Code rate, that is, a ratio of a quantity of input bits for channel coding to a quantity of bits carried on a physical channel. A value in the table is an actual code rate multiplied by 1024.
(3) Spectrum efficiency, that is, the code rate multiplied by a modulation order. Modulation orders corresponding to QPSK, 16QAM, or 64QAM are 2, 4 or 6 respectively.

**Table 1 CQI table (a target BLER is 0.00001)**

| CQI index | Modulation scheme | Code rate (code rate) x 1024 | Spectrum efficiency (spectrum efficiency) |
|---|---|---|---|
| 0 | QPSK | Undefined (out of range) | |
| 1 | QPSK | 30 | 0.0586 |
| 2 | QPSK | 50 | 0.0977 |
| 3 | QPSK | 78 | 0.1523 |
| 4 | QPSK | 120 | 0.2344 |
| 5 | QPSK | 193 | 0.3770 |
| 6 | QPSK | 308 | 0.6016 |
| 7 | QPSK | 449 | 0.8770 |
| 8 | QPSK | 602 | 1.1758 |
| 9 | 16QAM | 378 | 1.4766 |
| 10 | 16QAM | 490 | 1.9141 |
| 11 | 16QAM | 616 | 2.4063 |
| 12 | 64QAM | 466 | 2.7305 |
| 13 | 64QAM | 567 | 3.3223 |
| 14 | 64QAM | 666 | 3.9023 |
| 15 | 64QAM | 772 | 4.5234 |

**Table 2 CQI table (a target BLER is 0.1)**

| CQI index | Modulation scheme | Code rate x 1024 | Spectrum efficiency |
|---|---|---|---|
| 0 | QPSK | Undefined (out of range) | |
| 1 | QPSK | 78 | 0.1523 |
| 2 | QPSK | 120 | 0.2344 |
| 3 | QPSK | 193 | 0.3770 |
| 4 | QPSK | 308 | 0.6016 |
| 5 | QPSK | 449 | 0.8770 |
| 6 | QPSK | 602 | 1.1758 |
| 7 | 16QAM | 378 | 1.4766 |
| 8 | 16QAM | 490 | 1.9141 |
| 9 | 16QAM | 616 | 2.4063 |
| 10 | 64QAM | 466 | 2.7305 |
| 11 | 64QAM | 567 | 3.3223 |
| 12 | 64QAM | 666 | 3.9023 |
| 13 | 64QAM | 772 | 4.5234 |
| 14 | 64QAM | 873 | 5.1152 |
| 15 | 64QAM | 948 | 5.5547 |

If target performance required by a service needs to be achieved, a data transmission format that satisfies the target performance needs to be selected based on a current SINR, including a transport block size, a modulation scheme, an encoding rate, and the like. The terminal may store one correspondence table of the SINR and the CQI, and estimate, for a reference signal sent by the base station, an SINR of the reference signal received by the terminal. Then, a CQI index corresponding to a value of the SINR is obtained by searching the table based on the SINR. Based on this, the terminal may feed back the CQI index to the base station by using 4 bits.

The target performance may be usually represented by a BLER, and a BLER corresponding to a most commonly used CQI table is usually 0.1. For a URLLC service, to achieve high reliability performance, a CQI table corresponding to a BLER of 0.00001 is further specially introduced into a new radio (new radio, NR) system. If an extremely low BLER such as 0.00001 is to be achieved, a large quantity of coded redundant bits are introduced to resist channel noise and interference, to ensure correct reception by the terminal. In addition, it should be further noted that, although Table 1 and Table 2 have only differences between two rows of modulation schemes and encoding combinations in form, for a same modulation scheme and encoding combination, for example, CQI index 7 in Table 1 and CQI index 5 in Table 2, modulation schemes are both QPSK and code rates are both 449. However, due to different target BLERs, requirements on channel quality are also different. Apparently, an SINR required in Table 2 is higher than that in Table 1. Therefore, when the terminal reports the CQI, in addition to estimating an SINR of the reference signal after the reference signal passes through the radio channel, the terminal further needs to learn target performance (that is, the BLER) corresponding to the CQI reported this time, and reports the corresponding CQI based on the BLER and the SINR.

For CSI reporting, the base station configures a plurality of CSI reports for the terminal. Each CSI report corresponds to a group of CSI reference signals, a corresponding CQI table, a type of reported CSI, an uplink resource required for reporting, and the like. Then, the base station triggers one or more CSI reports by using radio resource control (radio resource control, RRC) signaling or DCI. The terminal may measure a CSI reference signal (reference signal, RS) based on a configuration parameter corresponding to a triggered CSI report to obtain an SINR of the reference signal, then may obtain a CQI index based on a corresponding CQI table, and report the CQI index to the base station by using an uplink resource.

In NR data transmission, downlink data is carried on a PDSCH, and control information such as a data format and a transmission mode related to downlink data transmission may be carried on a PDCCH. The control information may include a modulation scheme, an encoding code rate, and a transport block size (transport block size, TBS) of the PDSCH. The foregoing control information may be indicated based on an MCS index in the DCI. The base station and the terminal simultaneously maintain the following Table 3 and Table 4, to satisfy a plurality of communication requirements corresponding to an NR protocol.

**Table 3 MCS table 1 of a PDSCH**

| MCS index | Modulation order (modulation order) Qₘ | Target code rate (target code rate) R x 1024 | Spectrum efficiency |
|---|---|---|---|
| 0 | 2 | 120 | 0.2344 |
| 1 | 2 | 157 | 0.3066 |
| 2 | 2 | 193 | 0.3770 |
| 3 | 2 | 251 | 0.4902 |
| 4 | 2 | 308 | 0.6016 |
| 5 | 2 | 379 | 0.7402 |
| 6 | 2 | 449 | 0.8770 |
| 7 | 2 | 526 | 1.0273 |
| 8 | 2 | 602 | 1.1758 |
| 9 | 2 | 679 | 1.3262 |
| 10 | 4 | 340 | 1.3281 |
| 11 | 4 | 378 | 1.4766 |
| 12 | 4 | 434 | 1.6953 |
| 13 | 4 | 490 | 1.9141 |
| 14 | 4 | 553 | 2.1602 |
| 15 | 4 | 616 | 2.4063 |
| 16 | 4 | 658 | 2.5703 |
| 17 | 6 | 438 | 2.5664 |
| 18 | 6 | 466 | 2.7305 |
| 19 | 6 | 517 | 3.0293 |
| 20 | 6 | 567 | 3.3223 |
| 21 | 6 | 616 | 3.6094 |
| 22 | 6 | 666 | 3.9023 |
| 23 | 6 | 719 | 4.2129 |
| 24 | 6 | 772 | 4.5234 |
| 25 | 6 | 822 | 4.8164 |
| 26 | 6 | 873 | 5.1152 |
| 27 | 6 | 910 | 5.3320 |
| 28 | 6 | 948 | 5.5547 |
| 29 | 2 | Reserved (reserved) | |
| 30 | 4 | Reserved (reserved) | |
| 31 | 6 | Reserved (reserved) | |

**Table 4 MCS table 2 of a PDSCH**

| MCS index | Modulation order Qₘ | Target code rate x 1024 | Spectrum efficiency |
|---|---|---|---|
| 0 | 2 | 30 | 0.0586 |
| 1 | 2 | 40 | 0.0781 |
| 2 | 2 | 50 | 0.0977 |
| 3 | 2 | 64 | 0.1250 |
| 4 | 2 | 78 | 0.1523 |
| 5 | 2 | 99 | 0.1934 |
| 6 | 2 | 120 | 0.2344 |
| 7 | 2 | 157 | 0.3066 |
| 8 | 2 | 193 | 0.3770 |
| 9 | 2 | 251 | 0.4902 |
| 10 | 2 | 308 | 0.6016 |
| 11 | 2 | 379 | 0.7402 |
| 12 | 2 | 449 | 0.8770 |
| 13 | 2 | 526 | 1.0273 |
| 14 | 2 | 602 | 1.1758 |
| 15 | 4 | 340 | 1.3281 |
| 16 | 4 | 378 | 1.4766 |
| 17 | 4 | 434 | 1.6953 |
| 18 | 4 | 490 | 1.9141 |
| 19 | 4 | 553 | 2.1602 |
| 20 | 4 | 616 | 2.4063 |
| 21 | 6 | 438 | 2.5664 |
| 22 | 6 | 466 | 2.7305 |
| 23 | 6 | 517 | 3.0293 |
| 24 | 6 | 567 | 3.3223 |
| 25 | 6 | 616 | 3.6094 |
| 26 | 6 | 666 | 3.9023 |
| 27 | 6 | 719 | 4.2129 |
| 28 | 6 | 772 | 4.5234 |
| 29 | 2 | Reserved (reserved) | |
| 30 | 4 | Reserved (reserved) | |
| 31 | 6 | Reserved (reserved) | |

The base station may notify, based on a combination of the DCI and an RNTI, the terminal of an MCS table corresponding to a currently scheduled PDSCH, and indicate an MCS index to the terminal based on the DCI. After receiving the MCS index, the terminal may learn modulation order Qₘ and code rate R by searching the table. The terminal may learn a size of a time-frequency resource based on time-frequency resource allocation information, and then may obtain the TBS size based on the modulation order Qₘ, the code rate R, and the size of the time-frequency resource.

In the NR system, the terminal may perform a channel measurement on a demodulation reference signal (demodulation reference signal, DMRS) of the PDSCH to obtain CSI, and then may send the CSI to the base station on a PUCCH resource indicated by the DCI. The base station determines, based on an SINR indicated by a CQI in the CSI, information such as a size of a data block, a modulation scheme, and a code rate that are transmitted through the PDSCH, and sends the PDSCH to the terminal. To receive the PDSCH correctly, the terminal needs an SINR of the PDSCH (or an SINR of the DMRS of the PDSCH) to reach a target SINR. The target SINR is determined based on factors such as a size of a data block, a modulation scheme, and a code rate that are transmitted on the PDSCH. Due to a CQI measurement error, some burst interference, and the like, an SINR indicated by the terminal by using the CQI is different from an actual SINR of a current PDSCH. As a result, the actual SINR of the current PDSCH is different from the target SINR of the PDSCH. If the actual SINR of the PDSCH is excessively low compared with the target SINR, it is difficult for the terminal to correctly receive the PDSCH. If the actual SINR of the PDSCH is excessively high compared with the target SINR, a waste of spectrum efficiency may be caused. Therefore, the terminal needs to notify the base station of a difference between the actual SINR and the target SINR of the PDSCH.

The CSI reported by the terminal may include a delta MCS. The delta MCS is a difference between an MCS corresponding to the PDSCH and an MCS obtained by performing a channel measurement based on the DMRS of the PDSCH. However, for a same MCS, different target performance corresponds to different target SINRs. In other words, the terminal cannot accurately determine the target SINR based on the MCS of the PDSCH scheduled by the base station. Consequently, the terminal and the base station have different understandings for a reported delta MCS, and the base station cannot correctly apply the delta MCS.

Optionally, the CSI reported by the terminal may include a delta CQI. The terminal may determine a reference CQI by searching the table based on the MCS corresponding to the PDSCH. The terminal may perform a channel estimation based on the DMRS of the PDSCH to obtain an actual CQI. The delta CQI is a difference between the reference CQI and the actual CQI. Similarly, the terminal cannot accurately determine the target SINR based on the MCS of the PDSCH scheduled by the base station. Consequently, the terminal and the base station have different understandings for a reported delta CQI, and the base station cannot correctly apply the delta CQI.

In another aspect, for a TB transmitted on the PDSCH, to improve transmission reliability, manners used in the NR include:
(1) Hybrid automatic repeat request (hybrid automatic repeat request, HARQ) retransmission: If a transmission is incorrect, the terminal feeds back a negative acknowledgment (negative acknowledgement, NACK) to the base station. The base station schedules retransmission of the TB, and the terminal combines information of a same TB that is transmitted twice or more times for decoding.
(2) PDSCH repetition: The base station may schedule PDSCH repetition in a transmission, to be specific, repeatedly send a same TB block for a plurality of times through a plurality of PDSCHs, thereby improving a receiving correctness rate.

In the foregoing two transmission manners, whether a single PDSCH or a plurality of PDSCHs are considered when the actual SINR is determined is also a problem to be resolved.

Embodiments of this application provide a CSI reporting method and an apparatus, to enable the terminal and the base station to have a consistent understanding for a reported delta CQI or MCS, thereby improving communication efficiency. FIG. 3 is an example flowchart of a CSI reporting method according to an embodiment of this application. The method may include the following operations.

S301: A base station sends DCI to a terminal, and correspondingly, the terminal receives the DCI.

The DCI is used for scheduling a PDSCH. The DCI may include MCS indication information of the PDSCH, and may further include time-frequency resource indication information of the PDSCH and DMRS configuration information of the PDSCH. The DMRS configuration information may include time-frequency resource information of a DMRS.

S302: The terminal measures the DMRS based on the DMRS configuration information of the PDSCH, to obtain a measurement result of the DMRS.

Because measured DMRSs are different, the terminal obtains different measurement results of the DMRSs. The following separately describes two measurement results of the DMRSs.

Case 1: The measurement result of the DMRS is obtained based on a DMRS of a first PDSCH.

In a possible implementation, if data carried in the first PDSCH is initial transmission data, the terminal may measure the DMRS of the first PDSCH, to obtain a measurement result of the DMRS. The terminal may determine, by scheduling a new data indicator (new data indicator, NDI) in DCI of the first PDSCH, whether the data carried in the first PDSCH is initial transmission data. The NDI indicates whether data transmitted in the first PDSCH is initial transmission data or retransmission data.

For a same HARQ process, if the NDI is toggled, it indicates that the data transmitted in the first PDSCH is initial transmission data. For example, if a value of an NDI in the DCI transmitted in S301 is different from a value of an NDI in DCI for previous dynamic scheduling, for example, from 0 to 1 or from 1 to 0, it indicates that the data transmitted in the first PDSCH is initial transmission data. If a value of an NDI in the DCI transmitted in S301 is the same as a value of an NDI in DCI for previous dynamic scheduling, it indicates that the data transmitted in the first PDSCH is retransmission data. Alternatively, that the NDI is 1 may indicate that the data is initial transmission data, and that the NDI is 0 may indicate that the data is retransmission data. Alternatively, that the NDI is 0 may indicate that the data is initial transmission data, and that the NDI is 1 may indicate that the data is retransmission data.

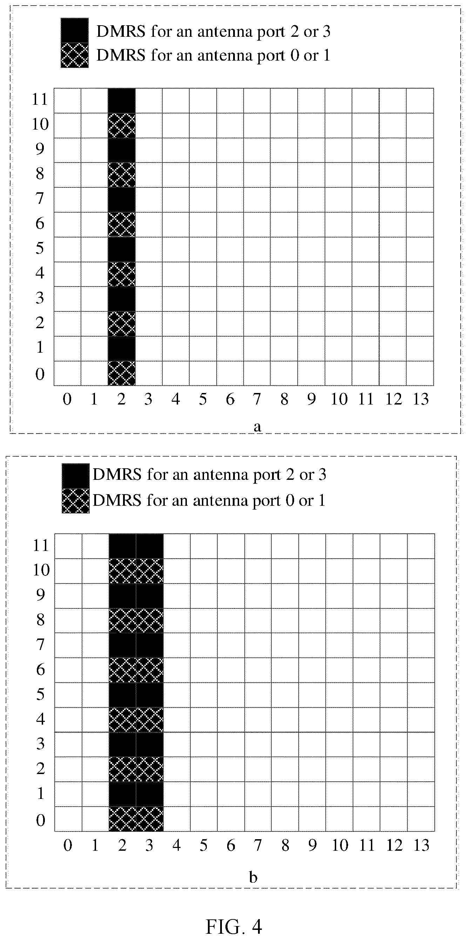

It should be understood that a resource block (resource block, RB) is allocated in a unit for the PDSCH in frequency domain. One RB is 12 subcarriers, and one PDSCH may occupy one or more RBs. If one PDSCH occupies a plurality of RBs, the plurality of RBs may be a plurality of consecutive RBs, or may be a plurality of inconsecutive RBs. The PDSCH may occupy 2 to 14 OFDM symbols in time domain. FIG. 4 is a schematic diagram of distribution of a DMRS of a PDSCH. In a of FIG. 4, the DMRS occupies one RB in the PDSCH, and an OFDM symbol index occupied by the DMRS is 2. In b of FIG. 4, the DMRS occupies two RBs in the PDSCH, and OFDM symbol indexes occupied by the DMRS are 2 and 3. For a in FIG. 4, a terminal may measure a DMRS on one RB to obtain a measurement result of the DMRS. For b in FIG. 4, a terminal may measure a DMRS on two RBs to obtain a measurement result of the DMRS.

Case 2: The measurement result of the DMRS is obtained based on a DMRS of a first PDSCH and a DMRS of a second PDSCH.

The second PDSCH and the first PDSCH transmit a same TB. The second PDSCH and the first PDSCH may be two repetitions of one TB, that is, redundancy versions of data transmitted in the first PDSCH and the second PDSCH are the same. Alternatively, the second PDSCH and the first PDSCH are two HARQ transmissions of one TB, that is, redundancy versions of data transmitted in the first PDSCH and the second PDSCH are different.

Assuming that data carried in the first PDSCH is initial transmission data, the terminal may determine a measurement result of the DMRS of the first PDSCH based on the method in case 1. Assuming that data carried in the second PDSCH is retransmission data, and a same TB is transmitted in the second PDSCH and the first PDSCH, the terminal may obtain a measurement result of the DMRS of the second PDSCH based on the DMRS of the second PDSCH. Alternatively, the terminal may obtain the measurement result of the DMRS in combination with the DMRS of the first PDSCH and the DMRS of the second PDSCH. For a method that the terminal obtains the measurement result of the DMRS of the second PDSCH based on the DMRS of the second PDSCH, refer to related descriptions in case 1. Details are not described herein again.

In an example, when the terminal obtains the measurement result of the DMRS in combination with the DMRS of the first PDSCH and the DMRS of the second PDSCH, the terminal may first separately obtain the measurement result of the DMRS of the first PDSCH and the measurement result of the DMRS of the second PDSCH, and then combine the measurement results of the two DMRSs by a method such as weighted summation or averaging, to obtain a measurement result of a DMRS.

It should be understood that, if the base station further schedules a third PDSCH, and the third PDSCH and the first PDSCH transmit a same TB, when determining a measurement result of a DMRS, the terminal may perform measurement based on a DMRS of the third PDSCH, or may obtain a measurement result of a DMRS based on the DMRS of the first PDSCH, the DMRS of the second PDSCH, and the DMRS of the third PDSCH.

In another possible implementation, the base station configures the PDSCH to be in a repeated transmission mode and a quantity of repetition is K, or the terminal indicates, by using the DCI, that the PDSCH is PDSCH repeated transmission and the quantity of repetition is K. It is assumed that a currently transmitted PDSCH is transmitted for the k^{th} time, where K is a positive integer, and k is a positive integer less than or equal to K. The terminal may obtain the measurement result of the DMRS by performing measurement based on a DMRS of a PDSCH at one transmission. Alternatively, the terminal may obtain the measurement result of the DMRS in combination with DMRSs of the PDSCH from the 1^{st} transmission to the k^{th} transmission. The following separately describes the foregoing different cases.

In an example, the terminal may obtain the measurement result of the DMRS in combination with the DMRSs of the PDSCH from the 1^{st} transmission to the k^{th} transmission. The terminal may separately determine the measurement results of the DMRSs of the PDSCHs from the 1^{st} transmission to the k^{th} transmission, and combine k measurement results of DMRSs, to obtain a measurement result of the DMRS of the PDSCH in the k^{th} transmission. For a specific combination manner, refer to the foregoing descriptions. This is not specifically limited in this application.

Optionally, the terminal may determine the measurement result of the DMRS based on the DMRS of the first PDSCH in the k^{th} transmission. For an implementation, refer to related descriptions in Case 1. Details are not described herein again. According to the foregoing solution, the terminal may feed back latest channel quality to the base station.

Alternatively, the terminal may determine, based on DMRSs of PDSCHs from the 1^{st} transmission to the k^{th} transmission, an optimal measurement result of a DMRS in k transmissions. Optionally, when reporting the CSI, the terminal may also report, to the base station, which transmission is repeated transmission corresponding to the optimal measurement result of the DMRS. According to the foregoing solution, if the base station changes a transmit beam direction during k repeated transmissions, the base station may determine an optimal transmit beam direction based on reporting of the terminal. In a multi-TRP system, if a plurality of TRPs send k repeated transmissions in turn, the base station may determine an optimal TRP based on feedback of the terminal.

Alternatively, the terminal may determine, based on the DMRSs of the PDSCHs from the 1^{st} transmission to the k^{th} transmission, a worst measurement result of a DMRS in k transmissions. Optionally, when reporting the CSI, the terminal may also report, to the base station, which transmission is repeated transmission corresponding to the worst measurement result of the DMRS. According to the foregoing solution, if the base station changes a transmit beam direction during k repeated transmissions, the base station may determine a worst transmit beam direction based on reporting of the terminal. In a multi-TRP system, if a plurality of TRPs send k repeated transmissions in turn, the base station may determine a worst TRP based on feedback of the terminal.

Alternatively, the terminal may separately determine the measurement results of the DMRSs of the PDSCH from the 1^{st} transmission to the k^{th} transmission, and calculate an average value of the measurement results of the k DMRSs.

In another example, if the currently transmitted PDSCH is transmitted for the k^{th} time, and there is no canceled repeated transmission during the k transmissions, the terminal may determine, based on the manner described in the example above, the measurement result of the DMRS in one transmission or a combined measurement result of the DMRS in a process of the k transmissions. Details are not described herein again.

In still another example, if sending of the n^{th} transmission in the k transmissions is canceled due to an uplink-downlink conflict or another reason, it may be defined whether the n^{th} repeated transmission is taken into account in calculation of the measurement results of the DMRS in a combined manner. n is a positive integer less than or equal to k.

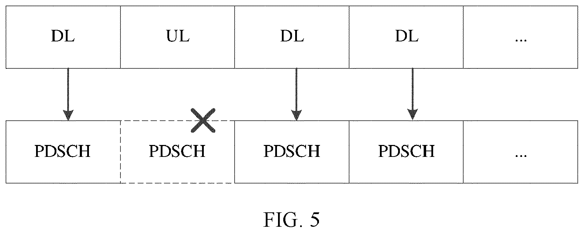

If the measurement results of the DMRS are calculated in a combined manner without taking the n^{th} repeated transmission into account, the terminal may calculate the measurement results of the DMRSs based on actual sending quantity in a combined manner. For example, refer to FIG. 5, in the process of the k transmissions, because the uplink-downlink conflict occurs during the 2^{nd} transmission, that is, a slot for the 2^{nd} transmission is actually an uplink slot, the terminal cannot receive the PDSCH sent by the base station, and therefore, sending of the 2^{nd} repeated transmission is canceled. If the PDSCH is actually sent three times, the terminal may separately measure DMRSs of the PDSCH during three repeated transmissions to obtain measurement results, and combine the three measurement results of the DMRSs, to determine a final measurement result of the DMRS.

If the measurement results of the DMRS are calculated in a combined manner with the n^{th} repeated transmission taken into account, the terminal may calculate the measurement results of the DMRS based on actual sending quantity in a combined manner, and determine a final measurement result of the DMRS in combination with a first factor. The first factor may be determined based on the actual sending quantity and the repetition quantity K configured by the base station. A relationship between the first factor and the actual sending quantity and the repetition quantity K configured by the base station may be specified in the communication protocol, or may be indicated by the base station.

For example, refer to FIG. 5, the 2^{nd} repeated transmission is canceled, and the PDSCH is actually sent three times. The terminal may determine the first factor based on a relationship between the first factor and the actual sending quantity and the repetition quantity K configured by the base station. The terminal may combine measurement results of the DMRSs of the PDSCH in the 1^{st} transmission, the 3^{rd} transmission, and the 4^{th} transmission, and determine a final measurement result of the DMRS in combination with the first factor. For example, the terminal may multiply three measurement results of the DMRS by the first factor, or divide three measurement results of the DMRS by the first factor, to obtain a final measurement result of the DMRS.

Based on the foregoing case 1 and case 2, the terminal may determine actual channel quality of the PDSCH. A method for calculating the measurement result of the DMRS during initial transmission data and retransmission data or repeated transmission of the PDSCH is defined, so that the base station and the terminal can align understanding of an actual measurement result of the DMRS, thereby effectively improving accuracy of a reported value.

S303: The terminal sends the CSI to the base station, and correspondingly, the base station receives the CSI.

The CSI may be determined based on the measurement result of the DMRS and a target BLER. The measurement result of the DMRS herein may be determined by using the method described in the above case 1 or case 2. The terminal may determine a corresponding MCS or CQI based on the measurement result of the DMRS and the target BLER. The target BLER may be explicitly indicated by the base station, or may be implicitly indicated by the base station. The following describes different indication manners of the target BLER by using situation a and situation b.

Situation a: The target BLER is implicitly indicated by the base station.

In a possible implementation, the target BLER may be determined based on at least one of the following parameters, and the target BLER may be associated with at least one of the following parameters.
1. Physical layer priority indicator (priority indicator). For example, when a physical layer priority indicator is a high priority, the target BLER may be 0.00001, and when the physical layer priority indicator is a low priority, the target BLER may be 0.1.

A physical layer priority indicator in DCI may indicate a priority of a HARQ-acknowledgment (HARQ-acknowledgement, HARQ-ACK) corresponding to a PDSCH scheduled by the DCI. For an uplink channel, when a high-priority uplink channel overlaps a low-priority uplink channel in time, the low-priority channel cancels sending. A required priority or reliability of a service carried on the PDSCH corresponding to the HARQ-ACK may also be deduced according to a priority of the HARQ-ACK. Therefore, a high priority may correspond to a target BLER with a value of 0.00001, and a low priority may correspond to a target BLER with a value of 0.1.

2. DCI format. For example, when a DCI format is DCI format 1_2, the target BLER may be 0.00001, and when the DCI format is DCI format 1_0 and DCI format 1_1, the target BLER may be 0.1.

In NR R15, DCI formats that can be used for scheduling a PDSCH include the DCI format 1_0 and the DCI format 1_1. In NR R16, DCI format 1_2 is introduced. A feature of the DCI format 1_2 is that a quantity of bits in many indicator fields are configurable. A base station may configure a quantity of bits in each indicator field, so that a total quantity of bits in the DCI format 1_2 is very small, thereby ensuring highly reliable transmission of the DCI format 1_2. Therefore, a target BLER of a PDSCH scheduled in the DCI format 1_2 may be 0.00001, and a target BLER of a PDSCH scheduled in another DCI format may be 0.1.

3. RNTI. A PDCCH may be scrambled by using a radio network temporary identifier (radio network temporary identifier, RNTI). For example, a PDCCH may be scrambled by using a cell RNTI (cell-RNTI, C-RNTI), or may be scrambled by using another RNTI, for example, a group RNTI (group-RNTI, G-RNTI). The base station may allocate the C-RNTI or the G-RNTI to the terminal, and the terminal to which the C-RNTI or the G-RNTI is allocated may receive a PDCCH scrambled by using the C-RNTI or the G-RNTI. Therefore, a value of the target BLER may be determined by using the RNTI. For example, when the PDCCH is scrambled by using an MCS-C-RNTI, the target BLER may be 0.00001, and when the PDCCH is scrambled by using another RNTI, the target BLER may be 0.1.

A PDSCH scheduled by the MCS-C-RNTI may use an MCS table with an extremely low code rate. One of the functions of the extremely low code rate is to ensure high reliability of transmission. Therefore, a target BLER of a PDSCH scheduled by the PDCCH that may be scrambled by using the MCS-C-RNTI may be 0.00001, and a target BLER of a PDSCH scheduled by the PDCCH that is scrambled by using the another RNTI may be 0.1.

4. PDSCH mapping type. For example, a target BLER corresponding to a PDSCH mapping type A (mapping type A) may be 0.1, and a target BLER corresponding to a PDSCH mapping type B (mapping type B) may be 0.00001.

The PDSCH mapping type A is a slot (slot)-level PDSCH, and a start symbol of the PDSCH mapping type A may be only the first four symbols in a slot. The PDSCH mapping type B is a non-slot (non-slot)-level PDSCH, and a start symbol of the PDSCH mapping type B may be at any location in a slot. In one slot, a plurality of PDSCHs in the PDSCH mapping type B may be scheduled in a time division manner. A start location of the PDSCH mapping type B is flexible, and may be used for ensuring a low-latency service of URLLC. In another aspect, a flexible location can also ensure flexible retransmission, and can ensure a high reliability feature of the URLLC. Therefore, the target BLER corresponding to the PDSCH mapping type B may be 0.00001, and the target BLER corresponding to the PDSCH mapping type A may be 0.1.

Optionally, an association relationship between the target BLER and at least one of the foregoing parameters may be specified in the communication protocol. This is not specifically limited in this application.

According to the foregoing solution, the terminal may determine the target BLER by using at least one of the foregoing parameters, to determine an actual MCS or CQI, so that a transmission resource overhead can be reduced, and the terminal can also determine actual channel quality.

In another possible implementation, when data carried in the PDSCH is initial transmission data, the target BLER may be a first value; and when data carried in the PDSCH is retransmission data, the target BLER may be a second value. The first value may be different from the second value. For example, the first value may be 0.1, and the second value may be 0.00001; alternatively, the first value may be 0.00001, and the second value may be 0.1. Optionally, the first value and the second value may also be selected by the base station from an optional value set of the target BLER, and then configured for the terminal. The optional value set of the target BLER may include several of 0.1, 0.01, 0.001, 0.0001, and 0.00001.

Optionally, the base station may configure a predefined transmission mode for the terminal. The predefined transmission mode may be applied to all PDSCH transmission, or may be applied to specific PDSCH transmission. When the base station configures the predefined transmission mode for the terminal, the target BLER may be distinguished as two different values in initial transmission and retransmission. When the base station configures a non-predefined transmission mode for the terminal, the target BLER is not distinguished as two values in initial transmission and retransmission, and the target BLER may be a fixed value.

It should be understood that a PDSCH to which the predefined transmission mode may be applied may be specified in the communication protocol. For example, the predefined transmission mode may have an association relationship with one or more parameters in the foregoing 1 to 4. For example, when the physical layer priority indicator is a high priority, the base station may configure the predefined transmission mode for the terminal, and the target BLER may be initial transmission 0.1 and retransmission 0.00001.

It should be noted that in this embodiment of this application, an example in which the target BLER is 0.1 and 0.00001 is used for description, but the target BLER is not limited to the two cases. A value of the BLER being 0.1 may indicate a low reliability requirement, and a value of the BLER may be large. A value of the BLER being 0.00001 may indicate a high reliability requirement, and a value of the BLER may be small.

According to the foregoing solution, by using the predefined transmission mode, the terminal may be notified of the target BLER corresponding to downlink transmission without increasing an overhead of downlink dynamic signaling, so that accuracy of a value reported by the terminal can be improved, so that the base station can adjust a parameter of downlink transmission more accurately, thereby improving network performance.

Case b: The target BLER is explicitly indicated by the base station.

The base station may send BLER indication information to the terminal. The terminal may receive the BLER indication information from the base station. The BLER indication information may indicate the target BLER. The base station may send the BLER indication information to the terminal by using higher layer signaling or the DCI in S301. The foregoing higher layer may be understood as a higher layer protocol layer, and includes at least one protocol layer above a physical layer: a medium access control (medium access control, MAC) layer, a radio link control (radio link control, RLC) layer, a packet data convergence protocol (packet data convergence protocol, PDCP) layer, an RRC layer, and a non-access stratum (non-access stratum, NAS). Correspondingly, in embodiments of this application, the higher layer signaling may be NAS signaling, an RRC message, or a medium access control (medium access control, MAC) control element (control element, CE). RRC signaling may include dedicated RRC signaling or broadcast/multicast RRC signaling. This is not limited in embodiments of this application.

In an example, the BLER indication information may indicate a value of the target BLER. The base station may add a BLER indicator field to the DCI, to indicate the target BLER. For example, when a value of the BLER indicator field is 0, the target BLER may be 0.1, and when a value of the BLER indicator field is 1, the target BLER may be 0.00001; or when the value of the BLER indicator field is 1, the target BLER may be 0.1, and when the value of the BLER indicator field is 0, the target BLER may be 0.00001.

In another example, the BLER indication information may indicate a difference (a delta BLER) between BLERs, a BLER logarithmic value difference, or a BLER ratio logarithmic value. The terminal may determine the target BLER based on a fixed BLER and the BLER indication information. The fixed BLER may be specified in the communication protocol. In other words, in a data transmission process between the base station and the terminal, a BLER agreed upon in advance is fixed. However, because performance objectives of an actual service are different, an actual BLER may be different from the fixed BLER agreed upon in advance. Therefore, the base station may indicate, to the terminal based on the BLER indication information, the BLER difference, the BLER logarithmic value difference, or the BLER ratio logarithmic value, or may be referred to as a BLER offset value.

According to the foregoing solution, the terminal may determine the target BLER based on the indication information of the base station, so that the base station and the terminal agree on the reported value, so that accuracy of the value reported by the terminal can be improved.

The terminal may determine the measurement result of the DMRS based on the methods in case 1 and case 2, and determine the target BLER based on situation a or situation b. The terminal may determine a first CQI index or a first MCS index by searching the table based on the measurement result of the DMRS and the target BLER. For example, when the target BLER is 0.00001, the terminal may search, based on the measurement result of the DMRS, the table corresponding to the target BLER of 0.00001, to determine the first CQI index or the first MCS index. The first CQI index or the first MCS index herein may be understood as a CQI index or an MCS index corresponding to channel quality of an actual channel corresponding to a current PDSCH transmission. The terminal pre-stores a correspondence between an SINR or an SNR and a CQI index, and compared with Table 1 and Table 3, and Table 2 and Table 4, it may be found that the CQI table is a subset of the MCS table. Therefore, the terminal may directly determine a correspondence between each MCS index and the SINR or the SNR by measurement, or the terminal may determine a correspondence between the SINR or the SNR and the MCS index by adding an interpolation to the correspondence between the SINR or the SNR and the CQI index. To achieve target performance required by a service, a data transmission format that satisfies the target performance needs to be selected based on a current SINR, and the terminal may store a correspondence table between the MCS index and the SINR or the SNR. The terminal may separately store different MCS tables for different BLERs.

Optionally, the CSI reported by the terminal to the base station may include the first CQI index or the first MCS index.

In a possible implementation, the CSI may include a difference (a delta CQI) between CQI indexes or a difference (a delta MCS) between MCS indexes. The terminal may determine an actual CQI index or an actual MCS index based on the measurement result of the DMRS and the target BLER. The terminal may determine a second CQI index or a second MCS index based on the MCS indication information in the DCI. The second CQI index or the second MCS index may be understood as a reference CQI index or a reference MCS index indicated by the base station. Therefore, the terminal may determine the delta CQI based on the first CQI index and the second CQI index, or the terminal may determine the delta MCS based on the first MCS index and the second MCS index. The following describes the delta CQI or the delta MCS by using different solutions.

### Solution 1

A terminal may determine an actual SINR based on a measurement result of a DMRS. The terminal may obtain a reference MCS based on MCS indication information in DCI, and determine a reference SINR in combination with a table indicated by a base station. The terminal may obtain a difference (delta SINR) between SINRs based on the actual SINR and the reference SINR. For example, delta SINR = actual SINR - reference SINR. If the delta SINR is a negative value, it indicates that the actual SINR is excessively small and is insufficient to support the MCS indicated by the MCS indication information, and the terminal cannot accurately receive a PDSCH. If the delta SINR is a positive value, it indicates that the actual SINR is excessively large, and a waste of spectrum resource may be caused.

The terminal may obtain a delta CQI or a delta MCS through quantization based on the delta SINR.

It should be noted that a quantity of values of the delta CQI or the delta MCS is limited by a quantity of reported bits. When the quantity of reported bits is N, a total of 2^{N} values may be reported. N is a positive integer. The correspondence between a value of a bit sequence and the delta CQI or the delta MCS may be indicated by the base station, or may be specified in the communication protocol. This is not specifically limited in this application.

In this application, Table 5 is used as an example to describe the correspondence between the value of the bit sequence and the delta CQI.

**Table 5: Example of a correspondence between a value of a bit sequence and a delta CQI**

| delta CQI field | delta CQI value |
|---|---|
| 00 | -2 |
| 01 | -1 |
| 10 | 0 |
| 11 | 1 |

It should be understood that, a quantity of bits of the delta CQI field in Table 5 is an example, and does not constitute a limitation on a quantity of bits of the delta CQI field or a delta MCS field.

Optionally, a specific quantized relationship between the delta SINR and the delta CQI or the delta MCS is measured and stored by the terminal in advance. Alternatively, the terminal performs quantization based on an actual channel condition. For example, delta SINR = 1.5 dB indicates that a corresponding delta CQI is adjusted by one level, or delta SINR = 1 dB indicates that a corresponding delta MCS is adjusted by one level.

### Solution 2

A terminal may determine an actual SINR based on a measurement result of a DMRS. In addition, an actual MCS index may be determined by searching a table based on the actual SINR and a target BLER. The terminal may determine a reference MCS index based on MCS indication information in DCI. The terminal may determine a delta MCS based on the actual MCS index and the reference MCS index.

### Solution 3

A terminal may determine an actual SINR based on a measurement result of a DMRS. In addition, an actual CQI index may be determined by searching a table based on the actual SINR and a target BLER. The terminal may determine a reference CQI index based on MCS indication information in DCI. For example, the terminal may determine spectrum efficiency and a code rate by searching the table based on the MCS indication information, and determine the CQI index by searching the table based on the spectrum efficiency and the code rate. For example, when the MCS index indicated by the MCS indication information is 8 and a table that the base station indicates an MCS is Table 3, the terminal may determine that the spectrum efficiency is 1.1758 and the code rate is 602, which are indicated by the MCS indication information. The terminal may determine, by searching Table 1 based on the determined spectrum efficiency and code rate, that a corresponding CQI index is 8.

The terminal may determine a delta CQI based on the actual CQI index and the reference CQI index.

It should be noted that a quantity of values of the delta CQI or the delta MCS is limited by a quantity of reported bits. For details, refer to related descriptions in the foregoing solution 1.

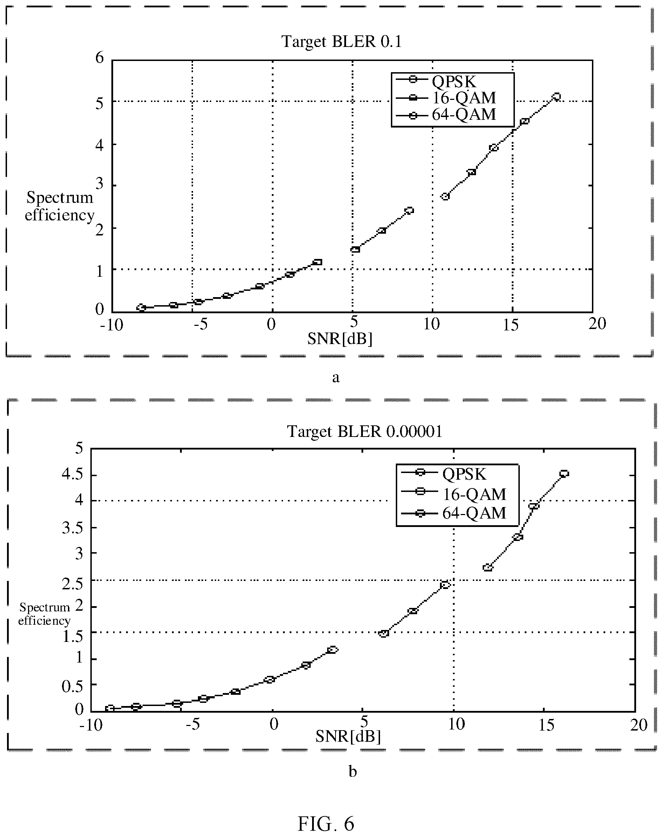

A CQI table is a correspondence between a CQI and an SINR or an SNR. In FIG. 6, an SNR is used as an example for description. Refer to FIG. 6, for different target BLERs, a same CQI corresponds to different SNRs, and there is a difference between two SNRs of the different target BLERs. Assuming that a difference between SNRs of different target BLERs is basically fixed, if the terminal reports a delta CQI according to a in FIG. 6, the base station may also adjust the delta CQI to a delta CQI according to b in FIG. 6. A quantity of bits of the delta CQI or the delta MCS reported by the terminal is limited, which means that a value range that can be reported is limited. For example, as for two bits, a reported value range is [1, 0, -1, -2] dB. It can be learned from FIG. 6 that, for different target BLERs, a difference between two SNRs corresponding to a same CQI is about 1 dB. That is, if the terminal calculates a target SNR based on 0.1, but an actual target BLER is 0.00001, a reported value range obtained by the base station is [0, -1, -2, -3] dB.

Therefore, optionally, the terminal may determine an actual MCS index by using a fixed target BLER and an MCS offset value. Alternatively, the terminal may determine the actual CQI index by using the fixed target BLER and a CQI offset value. The base station may send MCS offset value indication information or CQI offset value indication information to the terminal by using the DCI or the higher layer signaling. Because an actual target BLER is different from the fixed target BLER, and if an MCS is obtained by searching a table based on the fixed target BLER, a difference between the obtained MCS and an MCS of the PDSCH scheduled by the base station is large, exceeding a reported delta MCS value range. Therefore, the base station may indicate the MCS offset value or the CQI offset value to the terminal, to resolve a problem that the fixed target BLER has an error, and adjust the delta MCS or the delta CQI to a value range that can be reported.

In an example, a terminal may determine an actual SINR based on a measurement result of a DMRS. Alternatively, the terminal may determine a reference SINR based on MCS indication information in DCI. The terminal may determine a delta SINR based on the actual SINR and the reference SINR. After quantizing the delta SINR into the delta MCS or the delta CQI, the terminal may obtain a final delta MCS or delta CQI in combination with the MCS offset value or the CQI offset value. For example, the terminal may subtract the MCS offset value or the CQI offset value from the delta MCS or the delta CQI, or the terminal may add the MCS offset value or the CQI offset value to the delta MCS or the delta CQI, to obtain a final delta MCS or delta CQI. The terminal may report the final delta MCS or delta CQI to the base station.

In another example, a terminal may determine an actual SINR based on a measurement result of a DMRS. The terminal determines an actual MCS or an actual CQI based on the actual SINR and a target BLER. The terminal may determine a reference MCS or a reference CQI based on the MCS indication information in the DCI. The terminal may determine a delta MCS based on the actual MCS, the reference MCS, and the MCS offset value. For example, delta MCS = actual MCS - reference MCS + MCS offset value, or delta MCS = actual MCS - reference MCS - MCS offset value. Alternatively, the terminal may determine a delta CQI based on the actual CQI, the reference CQI, and a CQI offset value. For example, delta CQI = actual CQI - reference CQI + CQI offset value, or delta CQI = actual CQI - reference CQI - CQI offset value.

According to the foregoing solution, the base station and the terminal may reach a consensus understanding on the delta CQI or the delta MCS, so that accuracy of a value reported by the terminal can be improved, and the base station can adjust a parameter of downlink transmission more accurately, thereby improving network performance.

Optionally, after the base station receives the CSI reported by the terminal, if an MCS indicated for the terminal does not satisfy actual channel quality, the base station may adjust the MCS, to reduce a waste of spectrum resource and improve transmission performance of a PDSCH.

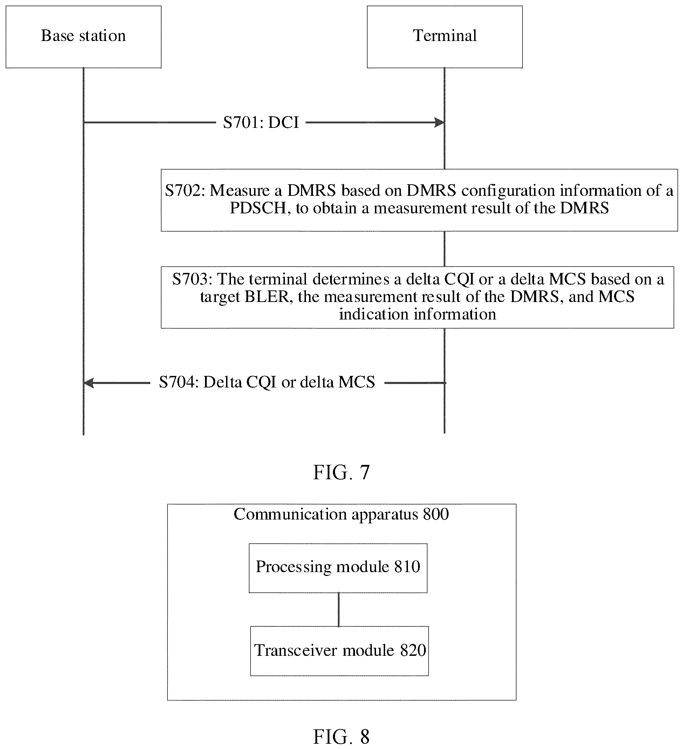

The following describes, with reference to FIG. 7, a CSI reporting method according to an embodiment of this application. FIG. 7 is an example flowchart of a CSI reporting method according to an embodiment of this application. The method may include the following operations.

S701: A base station sends DCI.

The DCI may include DMRS configuration information of a PDSCH and MCS indication information. Optionally, the DCI may include target BLER indication information, or the DCI may include BLER difference indication information. Optionally, the DCI may include CQI offset value indication information or MCS offset value indication information.

In a possible implementation, a target BLER or a BLER difference, and a CQI offset value or an MCS offset value may also be indicated by the base station to a terminal by using higher layer signaling.

S702: The terminal measures a DMRS to obtain a measurement result of the DMRS.

The measurement result of the DMRS may be a measurement result of a DMRS of the PDSCH in one transmission, or may be obtained by combining measurement results of DMRSs of the PDSCH in a plurality of transmissions. For details, refer to related descriptions in case 1 and case 2. Details are not described herein again.

S703: The terminal determines a delta CQI or a delta MCS based on the target BLER, the measurement result of the DMRS, and the MCS indication information.

The target BLER may be explicitly indicated by the base station. For details, refer to related descriptions in situation b. Details are not described herein again. For example, the target BLER may be a value indicated by a BLER indicator field in the DCI, or may be determined by a fixed BLER in combination with a BLER difference indicated by the base station.

Alternatively, the target BLER may be implicitly indicated by the base station. For details, refer to related descriptions in situation a. Details are not described herein again.

For a method for determining the delta CQI or the delta MCS by the terminal, refer to related descriptions of the terminal in solution 1 to solution 3. Optionally, the delta CQI or the delta MCS may alternatively be determined based on the CQI offset value or the MCS offset value. For details, refer to related descriptions in S303. Details are not described herein again.

S704: The terminal reports the delta MCS or the delta CQI.

A time-frequency resource used by the terminal to report the delta MCS or the delta CQI may be indicated by the base station. For example, the base station may configure one or more CSI reports for the terminal. Each CSI report may include a time-frequency resource for reporting CSI, and the terminal may report the delta MCS or the delta CQI on the time-frequency resource for reporting the CSI. The terminal may report the delta MCS by reporting indication information of the delta MCS, or report the delta CQI by reporting indication information of the delta CQI.

It should be understood that, in this embodiment of this application, all steps shown in FIG. 7 may be performed, or a person skilled in the art may select some steps from the steps shown in FIG. 7 to perform, to constitute a complete embodiment.

It may be understood that, to implement functions in the foregoing embodiments, the base station and the terminal include corresponding hardware structures and/or software modules for performing each function. A person skilled in the art should be easily aware that, in combination with the units and the method steps in the examples described in embodiments disclosed in this application, this application can be implemented through hardware or a combination of hardware and computer software. Whether a function is executed through hardware or hardware driven by computer software depends on particular application scenarios and design constraint conditions of the technical solutions.

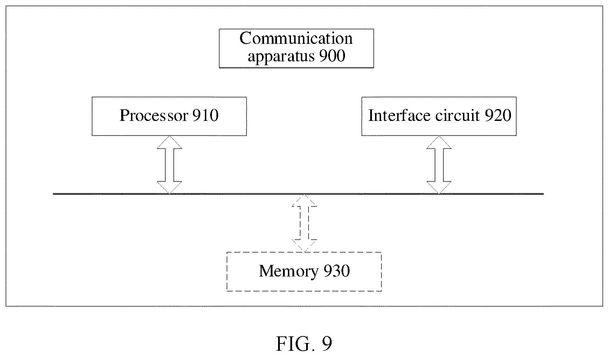

FIG. 8 and FIG. 9 are schematic diagrams of structures of possible communication apparatuses according to embodiments of this application. The communication apparatuses may be configured to implement functions of the terminal or the base station in the foregoing method embodiments, and therefore can also achieve beneficial effects of the foregoing method embodiments. In this embodiment of this application, the communication apparatus may be one of the terminals 120a to 120j shown in FIG. 1, may be the base station 110a or 110b shown in FIG. 1, or may be a module (for example, a chip) used in a terminal or a base station.

As shown in FIG. 8, a communication apparatus 800 includes a processing module 810 and a transceiver module 820. The communication apparatus 800 is configured to implement the functions of the terminal or the base station in the method embodiment shown in FIG. 3 or FIG. 7.

When the communication apparatus 800 is configured to implement the functions of the terminal in the method embodiment shown in FIG. 3, the transceiver module 820 is configured to receive DCI, and the processing module 810 is configured to measure a DMRS of a first PDSCH based on DMRS configuration information of a first PDSCH, to obtain a measurement result of a DMRS of the first PDSCH. The transceiver module 820 is further configured to send CSI.

When the communication apparatus 800 is configured to implement the functions of the terminal in the method embodiment shown in FIG. 7, the transceiver module 820 is configured to receive DCI, and the processing module 810 is configured to: measure a DMRS to obtain a measurement result of the DMRS; and determine a delta CQI or a delta MCS based on a target BLER, the measurement result of the DMRS, and MCS indication information. The transceiver module 820 is further configured to send the delta CQI or the delta MCS.

When the communication apparatus 800 is configured to implement the functions of the base station in the method embodiment shown in FIG. 3, the processing module 810 is configured to generate the DCI. The transceiver module 820 is configured to send the DCI. The transceiver module 820 is further configured to receive the CSI.

When the communication apparatus 800 is configured to implement the functions of the base station in the method embodiment shown in FIG. 7, the processing module 810 is configured to generate the DCI. The transceiver module 820 is configured to send the DCI. The transceiver module 820 is further configured to receive the delta CQI or the delta MCS.

For more detailed descriptions of the processing module 810 and the transceiver module 820, directly refer to related descriptions in the method embodiment shown in FIG. 3 or FIG. 7. Details are not described herein again.

As shown in FIG. 9, a communication apparatus 900 includes a processor 910 and an interface circuit 920. The processor 910 and the interface circuit 920 are coupled to each other. It can be understood that the interface circuit 920 may be a transceiver or an input/output interface. Optionally, the communication apparatus 900 may further include a memory 930, configured to store instructions executed by the processor 910, or store input data for the processor 910 to run instructions, or store data generated after the processor 910 runs instructions.

When the communication apparatus 900 is configured to implement the method shown in FIG. 3 or FIG. 7, the processor 910 is configured to implement the functions of the processing module 810, and the interface circuit 920 is configured to implement the functions of the transceiver module 820.

When the communication apparatus is a chip used in a terminal, the chip in the terminal implements functions of the terminal in the foregoing method embodiments. The chip in the terminal receives information from another module (for example, a radio frequency module or an antenna) in the terminal, where the information is sent by a base station to the terminal; or the chip in the terminal sends information to another module (for example, a radio frequency module or an antenna) in the terminal, where the information is sent by the terminal to the base station.

When the communication apparatus is a module used in a base station, the module in the base station implements functions of the base station in the foregoing method embodiments. The module in the base station receives information from another module (for example, a radio frequency module or an antenna) in the base station, where the information is sent by a terminal to the base station; or the module in the base station sends information to another module (for example, a radio frequency module or an antenna) in the base station, where the information is sent by the base station to the terminal. The module in the base station herein may be a baseband chip of the base station, or may be a DU or another module. The DU herein may be a DU in an open radio access network (open radio access network, O-RAN) architecture.

It can be understood that the processor in this embodiment of this application may be a central processing unit (Central Processing Unit, CPU), or may be another general purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general purpose processor may be a microprocessor or any conventional processor.

The method steps in embodiments of this application may be implemented in a hardware manner, or may be implemented in a manner of executing software instructions by a processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may alternatively be a component of the processor. The processor and the storage medium may be located in an ASIC. In addition, the ASIC may be located in a base station or a terminal. Certainly, the processor and the storage medium may exist in the base station or the terminal as discrete components.

All or some of the foregoing embodiments may be implemented by using software, hardware, firmware, or any combination thereof. When software is used to implement embodiments, all or a part of embodiments may be implemented in a form of a computer program product. The computer program product includes one or more computer programs or instructions. When the computer programs or instructions are loaded and executed on a computer, all or some of procedures or functions in embodiments of this application are executed. The computer may be a general-purpose computer, a special-purpose computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, a computer, a server, or a data center to another website, computer, server, or data center in a wired or wireless manner. The computer-readable storage medium may be any usable medium accessible by a computer, or a data storage device, such as a server or a data center, integrating one or more usable media. The usable medium may be a magnetic medium, for example, a floppy disk, a hard disk, or a magnetic tape; may be an optical medium, for example, a digital versatile disc; or may be a semiconductor medium, for example, a solid-state drive. The computer-readable storage medium may be a volatile or nonvolatile storage medium, or may include two types of storage media: a volatile storage medium and a nonvolatile storage medium.

In embodiments of this application, unless otherwise specified or a logic conflict occurs, terms and/or descriptions in different embodiments are consistent and may be mutually referenced, and technical features in different embodiments may be combined to form a new embodiment based on an internal logical relationship.

In this application, "at least one" means one or more, and "a plurality of" means two or more. The term "and/Or" describes an association relationship for describing associated objects and represents that three relationships may exist. For example, A and/or B may represent the following cases: Only A exists, both A and B exist, and only B exists, where A and B may be singular or plural. In the text descriptions of this application, the character "/" usually represents an "or" relationship between the associated objects. In a formula in this application, the character "/" represents a "division" relationship between the associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. The sequence numbers of the foregoing processes do not mean execution sequences, and the execution sequences of the processes should be determined based on functions and internal logic of the processes.

## Claims

1. A channel state information CSI reporting method, comprising:
receiving downlink control information, wherein the downlink control information comprises modulation and coding scheme MCS indication information and demodulation reference signal DMRS configuration information of a first physical downlink shared channel PDSCH;
measuring a DMRS of the first PDSCH based on the DMRS configuration information of the first PDSCH, to obtain a measurement result of the DMRS of the first PDSCH; and
sending channel state information CSI, wherein the CSI is determined based on the measurement result of the DMRS and a target block error rate BLER of the first PDSCH.

2. The method according to claim 1, wherein the CSI comprises a difference between MCS indexes or a difference between CQI indexes;
the difference between the MCS indexes is determined based on a first MCS index and a second MCS index, the first MCS index is determined based on the measurement result of the DMRS and the target BLER of the first PDSCH, and the second MCS index is indicated by the MCS indication information; and
the difference between the CQI indexes is determined based on a first CQI index and a second CQI index, the first CQI index is determined based on the measurement result of the DMRS and the target BLER of the first PDSCH, and the second CQI index is determined based on the MCS indication information.

3. The method according to claim 2, wherein the difference between the MCS indexes is alternatively determined based on an MCS offset value, and the MCS offset value is indicated by a network device; and
the difference between the CQI indexes is alternatively determined based on a CQI offset value, and the CQI offset value is indicated by the network device.

4. The method according to any one of claims 1 to 3, further comprising:
receiving BLER indication information, wherein the BLER indication information indicates the target BLER.

5. The method according to any one of claims 1 to 3, wherein the target BLER is determined based on at least one of the following parameters: a physical layer priority indicator, a downlink control information format, a radio network temporary identifier RNTI, or a mapping type of the first PDSCH.

6. The method according to any one of claims 1 to 3, wherein when data carried in the first PDSCH is initial transmission data, the target BLER is a first value; when data carried in the first PDSCH is retransmission data, the target BLER is a second value; and the first value is different from the second value.

7. The method according to any one of claims 1 to 6, wherein the CSI is alternatively determined based on a measurement result of a DMRS of a second PDSCH, and the second PDSCH and the first PDSCH transmit a same transport block TB.

8. A channel state information CSI reporting method, comprising:
sending downlink control information, wherein the downlink control information comprises modulation and coding scheme MCS indication information and demodulation reference signal DMRS configuration information of a first physical downlink shared channel PDSCH; and
receiving channel state information CSI, wherein the CSI is determined based on a measurement result of a DMRS and a target block error rate BLER of the first PDSCH.

9. The method according to claim 8, wherein the CSI comprises a difference between MCS indexes or a difference between CQI indexes;
the difference between the MCS indexes is determined based on a first MCS index and a second MCS index, the first MCS index is determined based on the measurement result of the DMRS and the target BLER of the first PDSCH, and the second MCS index is indicated by the MCS indication information; and
the difference between the CQI indexes is determined based on a first CQI index and a second CQI index, the first CQI index is determined based on the measurement result of the DMRS and the target BLER of the first PDSCH, and the second CQI index is determined based on the MCS indication information.

10. The method according to claim 9, wherein the method further comprises:
sending MCS offset value indication information or CQI offset value indication information.

11. The method according to any one of claims 8 to 10, further comprising:
sending BLER indication information, wherein the BLER indication information indicates the target BLER.

12. The method according to any one of claims 8 to 10, wherein the target BLER is determined based on at least one of the following parameters: a physical layer priority indicator, a downlink control information format, a radio network temporary identifier RNTI, or a mapping type of the first PDSCH.

13. The method according to any one of claims 8 to 10, wherein when data carried in the first PDSCH is initial transmission data, the target BLER is a first value; when data carried in the first PDSCH is retransmission data, the target BLER is a second value; and the first value is different from the second value.

14. The method according to any one of claims 8 to 13, wherein the CSI is alternatively determined based on a measurement result of a DMRS of a second PDSCH, and the second PDSCH and the first PDSCH transmit a same transport block TB.

15. A communication apparatus, comprising modules configured to perform the method according to any one of claims 1 to 7, or comprising modules configured to perform the method according to any one of claims 8 to 14.

16. A communication apparatus, comprising a processor and an interface circuit, wherein the interface circuit is configured to: receive a signal from another communication apparatus other than the communication apparatus and transmit the signal to the processor, or send a signal from the processor to another communication apparatus other than the communication apparatus, and the processor is configured to implement the method according to any one of claims 1 to 7 or the method according to any one of claims 8 to 14 by using a logic circuit or by executing code instructions.

17. A computer-readable storage medium, wherein the storage medium stores a computer program or instructions, and when the computer program or the instructions are executed by a communication apparatus, the method according to any one of claims 1 to 7 is implemented or the method according to any one of claims 8 to 14 is implemented.
